# EUROPÄISCHE PATENTSCHRIFT

(11) **EP 3 670 744 B1**
(45) Veröffentlichungstag und Bekanntmachung des Hinweises auf die Patenterteilung: **14.02.2024**
(21) Anmeldenummer: 19214669.4
(22) Anmeldetag: 10.12.2019
(51) Int. Cl.: E01C 19/26

(54) **BODENBEARBEITUNGSMASCHINE**
SOIL PROCESSING MACHINE
MACHINE DE TRAITEMENT DU SOL

(30) Priorität: 17.12.2018 DE 102018132377
(43) Veröffentlichungstag der Anmeldung: 24.06.2020
(73) Patentinhaber: Hamm AG, 95643 Tirschenreuth (DE)
(72) Erfinder: Meier, Matthias, 95643 Tirschenreuth (DE); Prechtl, Christopher, 95685 Falkenberg (DE)
(74) Vertreter: Ruttensperger Lachnit Trossin Gomoll

(56) Entgegenhaltungen:
- EP-A1- 0 053 598
- CN-U- 205 152 765
- US-A- 3 867 052
- US-A- 3 986 782

## Beschreibung

Die vorliegende Erfindung betrifft eine Bodenbearbeitungsmaschine, umfassend einen Maschinenrahmen mit zwei quer zu einer Maschinen-Längsrichtung in Abstand zueinander angeordneten, sich im Wesentlichen in der Maschinen-Längsrichtung erstreckenden Längsträgern und zwei in der Maschinen-Längsrichtung in Abstand zueinander angeordneten, sich im Wesentlichen quer zur Maschinen-Längsrichtung erstreckenden Querträgern, eine in der Maschinen-Längsrichtung zwischen den Querträgern an den Längsträgern um eine Walzendrehachse drehbar getragene Bodenbearbeitungswalze, eine Kopplungsanordnung zur Ankopplung des Maschinenrahmens an einen weiteren Maschinenrahmen der Bodenbearbeitungsmaschine oder an eine weitere Maschine, sowie eine Fahrwerksanordnung.

Eine derartige Bodenbearbeitungsmaschine ist aus der EP 2 142 706 B1 bekannt. Diese bekannte Bodenbearbeitungsmaschine umfasst einen Maschinenrahmen, der vermittels einer eine Deichseleinheit umfassenden Kopplungsanordnung an eine Zugmaschine angehängt werden kann und durch diese mit der auf dem Boden aufstehenden Verdichterwalze über den zu bearbeitenden Boden gezogen werden kann. Eine bei dieser bekannten Bodenbearbeitungsmaschine vorgesehene Fahrwerksanordnung umfasst an jedem der beiden Längsträger des Maschinenrahmens ein daran drehbar getragenes Rad. Um in einem Überführungsbetriebszustand, in welchem vermitteltes der Bodenbearbeitungswalze kein Boden bearbeitet werden soll sondern die Bodenbearbeitungsmaschine zu dem zu bearbeitenden Boden geschleppt werden soll, zu ermöglichen, dass die Bodenbearbeitungswalze nicht in Kontakt mit dem Boden ist und somit die Bodenbearbeitungsmaschine auf den an den Längsträgern drehbar getragenen Rädern rollen kann, ist ein Mechanismus vorgesehen, durch welchen die Bodenbearbeitungswalze bezüglich des Maschinenrahmens angehoben bzw. abgesenkt werden kann.

Aus der US 3 867 052 A ist eine Bodenbearbeitungsmaschine gemäß dem Oberbegriff des Anspruchs 1 bekannt. An einem der Querträger dieser Bodenbearbeitungsmaschine ist eine zum Koppeln der Bodenbearbeitungsmaschine mit einer Zugmaschine vorgesehene Deichsel angeordnet. An dem anderen Querträger ist eine Fahrwerksanordnung mit zwei nebeneinander angeordneten Fahrwerkseinheiten vorgesehen. In Zuordnung zu jeder der Fahrwerkseinheiten ist eine Kolben/Zylinder-Anordnung vorgesehen. Die Zylinderkammern der beiden Kolben/Zylinder-Anordnungen sind über von diesen zu jeweiligen T-Stücken führende Verbindungsleitungen gemeinsam mit einer Druckfluidquelle bzw. einem Druckfluidreservoir verbunden.

Die US 3 986 782 A offenbart eine Bodenbearbeitungsmaschine mit einer an einem Maschinenrahmen drehbar getragenen Bodenbearbeitungswalze. Der Maschinenrahmen weist eine die Bodenbearbeitungswalze aufnehmende U-förmige Struktur mit einem mit einer Deichsel gekoppelten Querträger und zwei von dem Querträger ausgehenden, die Bodenbearbeitungswalze drehbar tragenden Längsträgern auf. An einem an dem Maschinenrahmen schwenkbar getragenen, mit U-förmiger Struktur ausgebildeten Schwenkrahmen ist beidseits der Bodenbearbeitungswalze jeweils ein eine Fahrwerkseinheit bereitstellendes Rad getragen. Über eine mit dem Schwenkrahmen gekoppelte Kolben/ZylinderAnordnung kann der Schwenkrahmen mit den beiden daran getragenen Rädern bezüglich des Maschinenrahmens verschwenkt werden, um dadurch den Maschinenrahmen mit der daran drehbar getragenen Bodenbearbeitungswalze auf und ab zu bewegen.

Es ist die Aufgabe der vorliegenden Erfindung, eine Bodenbearbeitungsmaschine vorzusehen, welche im Bodenbearbeitungsbetrieb eine erhöhte Einsatzvariabilität aufweist.

Erfindungsgemäß wird diese Aufgabe gelöst durch eine Bodenbearbeitungsmaschine gemäß Anspruch 1, umfassend:
- einen Maschinenrahmen mit zwei quer zu einer Maschinen-Längsrichtung in Abstand zueinander angeordneten, sich im Wesentlichen in der Maschinen-Längsrichtung erstreckenden Längsträgern und zwei in der Maschinen-Längsrichtung in Abstand zueinander angeordneten, sich im Wesentlichen quer zur Maschinen-Längsrichtung erstreckenden Querträgern,
- eine in der Maschinen-Längsrichtung zwischen den Querträgern an den Längsträgern um eine Walzendrehachse drehbar getragene Bodenbearbeitungswalze,
- eine Kopplungsanordnung zur Ankopplung des Maschinenrahmens an einen weiteren Maschinenrahmen der Bodenbearbeitungsmaschine oder an eine weitere Maschine,
- eine Fahrwerksanordnung.

Diese Bodenbearbeitungsmaschine zeichnet sich dadurch aus, dass die Fahrwerksanordnung wenigstens eine an dem Maschinenrahmen höhenverstellbar getragene Fahrwerkseinheit umfasst.

Bei dem erfindungsgemäßen Aufbau einer Bodenbearbeitungsmaschine ist die Bodenbearbeitungswalze am Maschinenrahmen, insbesondere den Längsträgern desselben, drehbar getragen. Um die Bodenbearbeitungswalze in bzw. außer Kontakt mit einem zu bearbeitenden Boden bringen zu können und insbesondere die durch die Bodenbearbeitungswalze auf den Boden ausgeübte Last variieren zu können, ist bei dem erfindungsgemäßen Aufbau vorgesehen, dass die Fahrwerksanordnung bzw. die wenigstens eine Fahrwerkseinheit derselben bezüglich des die Bodenbearbeitungswalze drehbar tragenden Maschinenrahmens höhenverstellbar ist. Dies ermöglicht es insbesondere dann, wenn mehrere Fahrwerkseinheiten vorgesehen sind, durch entsprechende Einstellung der Höhenposition derselben bezüglich des die Bodenbearbeitungswalze drehbar tragenden Maschinenrahmens jede Fahrwerkseinheit individuell in ihrer Höhenposition einzustellen und somit Niveauunterschiede im Boden auszugleichen.

Dies ist vor allem dann von besonderer Bedeutung, wenn im Bodenbearbeitungsbetrieb die Bodenbearbeitungsmaschine nicht nur vermittels der Bodenbearbeitungswalze auf dem Boden aufsteht, sondern auch mit der Fahrwerksanordnung, so dass diese zur Einstellung der auf den Boden ausgeübten Last einen Teil des Gewichts der Bodenbearbeitungsmaschine trägt.

Bei der erfindungsgemäß aufgebauten Bodenbearbeitungsmaschine kann die Fahrwerksanordnung in Zuordnung zu jedem Längsträger eine an dem Längsträger höhenverstellbar getragene Fahrwerkseinheit umfassen. Die Fahrwerkseinheiten sind somit in seitlichen Bereichen angeordnet und kommen im Wesentlichen nicht in Kontakt mit dem bei einer Überfahrt bearbeiteten Bodenbereich. Hierzu kann die Die Fahrwerksanordnung bezüglich der Maschinen-Längsrichtung beidseits der Bearbeitungswalze jeweils eine Fahrwerkseinheit umfassen, so dass die Fahrwerkseinheiten quer zur Maschinen-Längsrichtung, also in der Richtung der Walzendrehachse, die Bodenbearbeitungswalze zwischen sich aufnehmen bzw. auf die Bodenbearbeitungswalze folgend angeordnet sind. Eine derartige Anordnung gewährleistet ferner, dass das oder ein wesentlicher Teil des Gewichts der Bodenbearbeitungswalze im Überführungsbetrieb durch die Fahrwerksanordnung aufgenommen werden kann. Für die vorangehend bereits angesprochene Kompensation von Niveauunterschieden des bearbeiteten Bodens umfasst die Fahrwerksanordnung erfindungsgemäß eine Mehrzahl von voneinander unabhängig höhenverstellbaren Fahrwerkseinheiten.

Um eine stabile, zuverlässig wirkende Höhenverstellung zu gewährleisten, wird vorgeschlagen, dass jede Fahrwerkseinheit in einem Ankopplungsbereich an den zugeordneten Längsträger schwenkbar angekoppelt ist und in einem bezüglich des Ankopplungsbereichs in der Maschinen-Längsrichtung in Abstand angeordneten Höhenverstellbereich bezüglich des zugeordneten Längsträgers über eine Höhenverstellanordnung höhenverstellbar abgestützt ist.

Die Höhenverstellanordnung kann beispielsweise eine Kolben/Zylinder-Einheit oder eine Spindeleinheit umfassen.

Die Fahrwerkseinheit kann einen in dem Ankopplungsbereich an den Längsträger schwenkbar angekoppelten und in dem Höhenverstellbereich mit der Höhenverstellanordnung gekoppelten Fahrwerksträger umfassen.

Um im Bereich jeder Fahrwerkseinheit eine gleichmäßige Abstützung des Gewichts der Bodenbearbeitungswalze erreichen zu können, wird vorgeschlagen, dass jede Fahrwerkseinheit einen in der Maschinen-Längsrichtung sich erstreckenden Bodenbearbeitungsmaschinen-Aufstandsflächenbereich aufweist, und dass die Walzendrehachse in der Maschinen-Längsrichtung zwischen einem ersten Aufstandsflächenbereich-Längsende und einem zweiten Aufstandsflächenbereich-Längsende positioniert ist.

Eine geringe Flächenlast durch die Fahrwerksanordnung kann erreicht werden, wenn jede Fahrwerkseinheit ein Raupenfahrwerk umfasst.

Um bei Bewegung über einen unebenen Boden einen Bewegungsausgleich zwischen den verschiedenen Fahrwerkseinheiten zugeordneten Raupenfahrwerken erreichen zu können, wird vorgeschlagen, dass das Raupenfahrwerk an den Fahrwerksträger im Wesentlichen frei schwenkbar angekoppelt ist.

Zur Verstärkung der Bodenbearbeitungswirkung der Bodenbearbeitungswalze kann dieser ein Schwingungsmechanismus mit wenigstens einer im Inneren der Bodenbearbeitungswalze angeordneten, um eine Unwucht-Drehachse drehbaren Unwuchtmasse zugeordnet sein. Ein derartiger Schwingungsmechanismus kann beispielsweise ein Vibrationsmechanismus sein, mit welchem auf die Bodenbearbeitungswalze eine diese periodisch in einer Richtung im Wesentlichen orthogonal zur Walzendrehachse, insbesondere im Wesentlichen in vertikaler Richtung, beschleunigende Kraft ausgeübt wird.

Um diese periodische Kraftwirkung erreichen zu können, kann der wenigstens einen Unwuchtmasse ein Unwuchtantrieb zugeordnet sein.

Insbesondere dann, wenn an der Bodenbearbeitungsmaschine Druckfluid bzw. ein Druckfluidkreislauf zur Verfügung steht, kann der Unwuchtantrieb einen Unwucht-Druckfluidantrieb mit einer Druckfluidpumpe und einem mit der Druckfluidpumpe über einen Druckfluidkreislauf gekoppelten Druckfluidmotor umfassen.

Bei einer alternativen, eine Übertragung der Antriebsenergie über ein Druckfluid nicht einbeziehenden Ausgestaltung kann vorgesehen sein, dass der Unwuchtantrieb einen ein Antriebsdrehmoment von einem Antriebsmotor auf die wenigstens eine Unwuchtmasse übertragenden mechanischen Übertragungsmechanismus, vorzugsweise umfassend einen Riementrieb, umfasst.

Der Fahrwerksanordnung kann für einen eigenständigen oder einen unterstützenden Fahrbetrieb ein Fahrwerksantrieb zum Antreiben der Bodenbearbeitungsmaschine in der Maschinen-Längsrichtung zugeordnet sein.

Auch hier kann, wenn an der Bodenbearbeitungsmaschine Druckfluid zur Verfügung steht, der Fahrwerksantrieb einen Fahrwerks-Druckfluidantrieb mit einer Druckfluidpumpe und einem mit der Druckfluidpumpe über einen Druckfluidkreislauf gekoppelten Druckfluidmotor umfassen.

Die Bodenbearbeitungsmaschine kann zum Bewegen in der Maschinen-Längsrichtung vermittels der Kopplungsanordnung an eine Zugmaschine ankoppelbar sein. Im Sinne der vorliegenden Erfindung ist in dieser Ausgestaltung die Bodenbearbeitungsmaschine also keine selbstfahrende Bodenbearbeitungsmaschine, die autark, also entkoppelt von der Zugmaschine, betrieben werden kann, auch wenn die Bodenbearbeitungsmaschine einen Fahrwerksantrieb aufweist, der beispielsweise unterstützend betrieben wird, wenn die Bodenbearbeitungsmaschine durch eine Zugmaschine bewegt wird.

Um eine stabile, gleichwohl jedoch einfach herzustellende Kopplung mit der Zugmaschine erreichen zu können, wird vorgeschlagen, dass die Kopplungsanordnung eine mit dem Maschinenrahmen vorzugsweise starr verbundene Deichseleinheit mit einer Kopplungsformation, vorzugsweise Kopplungspfanne, zur Ankopplung an eine an der Zugmaschine vorgesehene Gegen-Kopplungsformation, vorzugsweise Kopplungskugel, umfasst. Die Kopplungsformation und die Gegen-Kopplungsformation können somit also nach Art einer Kugelkopf-Kupplung zusammenwirken.

Um bei derartiger Ausgestaltung in einfacher Weise die Energie für den Antrieb einer Unwuchtmasse bereitstellen zu können, kann der Unwuchtantrieb an ein Antriebsaggregat der Zugmaschine ankoppelbar sein. Auch der Fahrwerksantrieb kann an ein Antriebsaggregat der Zugmaschine ankoppelbar sein, so dass an der Bodenbearbeitungsmaschine selbst kein Antriebsaggregat, beispielsweise in Form einer Brennkraftmaschine oder dergleichen, bereitgestellt werden muss.

Bei einer alternativen Ausgestaltungsart, bei welcher im Sinne der vorliegenden Erfindung die Bodenbearbeitungsmaschine als selbstfahrende Maschine ausgebildet ist, kann an dem einen Hinterwagen der Bodenbearbeitungsmaschine bereitstellenden weiteren Maschinenrahmen ein Antriebsaggregat vorgesehen sein, und die Kopplungsanordnung kann eine Lenk-Gelenksanordnung zur schwenkbaren Kopplung des wenigstens einen Teil eines Vorderwagens der Bodenbearbeitungsmaschine bereitstellenden Maschinenrahmens mit dem weiteren Maschinenrahmen um eine Lenk-Schwenkachse umfassen. Bei einer derartigen auch als Walzenzug bezeichneten Bodenbearbeitungsmaschine können zum Bewegen derselben in der Maschinen-Längsrichtung beispielsweise am Hinterwagen angetriebene Räder oder eine zur Drehung angetriebene weitere Bodenbearbeitungswalze vorgesehen sein. Auch ein Bedienstand für eine die Bodenbearbeitungsmaschine bedienende Bedienperson kann am Hinterwagen vorgesehen sein.

Die Erfindung betrifft ferner einen Bodenbearbeitungszug, umfassend eine Zugmaschine und eine an die Zugmaschine angekoppelte Bodenbearbeitungsmaschine, wie sie vorangehend als nicht selbstfahrende Bodenbearbeitungsmaschine beschrieben wurde.

Die Erfindung betrifft ferner Verfahren zum Betreiben einer erfindungsgemäß aufgebauten Bodenbearbeitungsmaschine, die Bodenbearbeitungsmaschine umfassend eine an einem Maschinenrahmen um eine Walzendrehachse drehbar getragene Bodenbearbeitungswalze, einen der Bodenbearbeitungswalze zugeordneten Schwingungsmechanismus mit wenigstens einer im Inneren der Bodenbearbeitungswalze angeordneten, um eine Unwucht-Drehachse drehbaren Unwuchtmasse sowie eine Hubanordnung, wobei durch die Hubanordnung die Bodenbearbeitungswalze in und außer Kontakt mit einem unter der Bodenbearbeitungswalze liegenden Boden positionierbar ist oder/und eine durch die Bodenbearbeitungswalze auf den unter der Bodenbearbeitungswalze liegenden Boden ausgeübte Auflagelast veränderbar ist.

Das erfindungsgemäße Verfahren umfasst die Maßnahmen:
a) am Beginn eines Bodenbearbeitungsvorgangs, Betreiben der Hubanordnung zum Positionieren der Bodenbearbeitungswalze derart, dass diese außer Kontakt mit dem unter dieser liegenden Boden ist oder eine durch diese auf den unter dieser liegenden Boden ausgeübte Auflagelast bezüglich einer Maximal-Auflagelast verringert ist,
b) nach Durchführung der Maßnahme a), in Betrieb Setzen des Schwingungsmechanismus,
c) nach Durchführung der Maßnahme b), Betreiben der Hubanordnung derart, dass die Bodenbearbeitungswalze in Kontakt mit dem unter dieser liegenden Boden kommt oder eine durch die Bodenbearbeitungswalze auf den unter dieser liegenden Boden ausgeübte der Auflagelast erhöht wird.

Mit den Maßnahmen a) bis c) wird es möglich, am Beginn eines Bodenbearbeitungsvorgangs die Bodenbearbeitungsmaschine bzw. den Schwingungsmechanismus derselben zunächst in Betrieb zu setzen, ohne dass die Bodenbearbeitungswalze in Kontakt oder wesentlichem Kontakt mit dem unter dieser liegenden Boden ist. Da in dieser Phase keine oder im Wesentlichen keine im Schwingungsmechanismus bereitgestellte Energie aus der Bodenbearbeitungswalze in den Boden eingeleitet und somit dissipiert wird, kann die zum Bringen des Schwingungsmechanismus in seinen Soll-Betriebszustand, also beispielsweise zum Erreichen einer bestimmten Soll-Drehzahl der wenigstens einen Unwuchtmasse, erforderliche Energie deutlich gesenkt werden bzw. es kann dieser Soll-Betriebszustand schneller erreicht werden.

Das erfindungsgemäße Verfahren kann alternativ oder zusätzlich zu den Maßnahmen a) bis c) folgende Maßnahme umfassen:
d) zur Durchführung eines Bodenbearbeitungsvorgangs mit in Betrieb gesetztem Schwingungsmechanismus, Betreiben der Hubanordnung derart, dass eine durch die Bodenbearbeitungswalze auf den unter dieser liegenden Boden ausgeübte Auflagelast bezüglich einer Maximal-Auflagelast verringert ist.

Zusätzlich zur Maßnahme d) kann das erfindungsgemäße Verfahren folgende Maßnahme umfassen:
e) während der Durchführung eines Bodenbearbeitungsvorgangs mit in Betrieb gesetztem Schwingungsmechanismus, Betreiben der Hubanordnung derart, dass eine durch die Bodenbearbeitungswalze auf den unter dieser liegenden Boden ausgeübte Auflagelast verändert wird.

Die alternativ oder zusätzlich zu den Maßnahmen a) bis c) durchführbaren Maßnahmen d) und e) ermöglichen es, die Wechselwirkung der Bodenbearbeitungswalze im Bodenbearbeitungsbetrieb mit dem durch diese zu bearbeitenden Boden so zu verändern bzw. einzustellen, dass die in den Boden eingeleitete Energie entsprechend verändert bzw. eingestellt wird und dementsprechend auch das Ergebnis des Bodenbearbeitungsvorgangs veränderbar bzw. einstellbar ist. Die Betriebscharakteristik der Bodenbearbeitungswalze kann somit an die Beschaffenheit des zu bearbeitenden Bodens angepasst werden.

Um im Verlauf eines derartigen Bodenbearbeitungsvorgangs die Bodenbearbeitungswalze in einfacher Weise über den zu bearbeitenden Boden bewegen zu können, kann die Hubanordnung eine Fahrwerksanordnung umfassen.

Die vorliegende Erfindung wird nachfolgend mit Bezug auf die beiliegenden Figuren detailliert beschrieben. Es zeigt:
- Fig. 1: eine Seitenansicht einer nicht selbstfahrenden Bodenbearbeitungsmaschine;
- Fig. 2: eine perspektivische Ansicht der Bodenbearbeitungsmaschine der Fig. 1;
- Fig. 3: einen Bodenbearbeitungszug mit der Bodenbearbeitungsmaschine der Fig. 1;
- Fig. 4: eine weitere Seitenansicht der Bodenbearbeitungsmaschine der Fig. 1;
- Fig. 5: eine Rückansicht der Bodenbearbeitungsmaschine der Fig. 1 mit vom Boden abgehobener Bodenbearbeitungswalze
- Fig. 6: eine der Fig. 5 entsprechende Ansicht mit auf dem Boden aufstehender Bodenbearbeitungswalze;
- Fig. 7: eine der Fig. 5 entsprechende Ansicht mit vom Boden abgehobenen Fahrwerkseinheiten;
- Fig. 8: eine der Fig. 6 entsprechende Ansicht mit variierendem Bodenniveau;
- Fig. 9: eine weitere perspektivische Ansicht einer nicht selbstfahrenden Bodenbearbeitungsmaschine;
- Fig. 10: ein Blockdiagramm zum Veranschaulichen der Kraftübertragung in der Bodenbearbeitungsmaschine der Fig. 9;
- Fig. 11: eine weitere perspektivische Ansicht einer nicht selbstfahrenden Bodenbearbeitungsmaschine;
- Fig. 12: ein Blockdiagramm zum Veranschaulichen der Kraftübertragung in der Bodenbearbeitungsmaschine der Fig. 11;
- Fig. 13: eine Seitenansicht einer selbstfahrenden Bodenbearbeitungsmaschine.

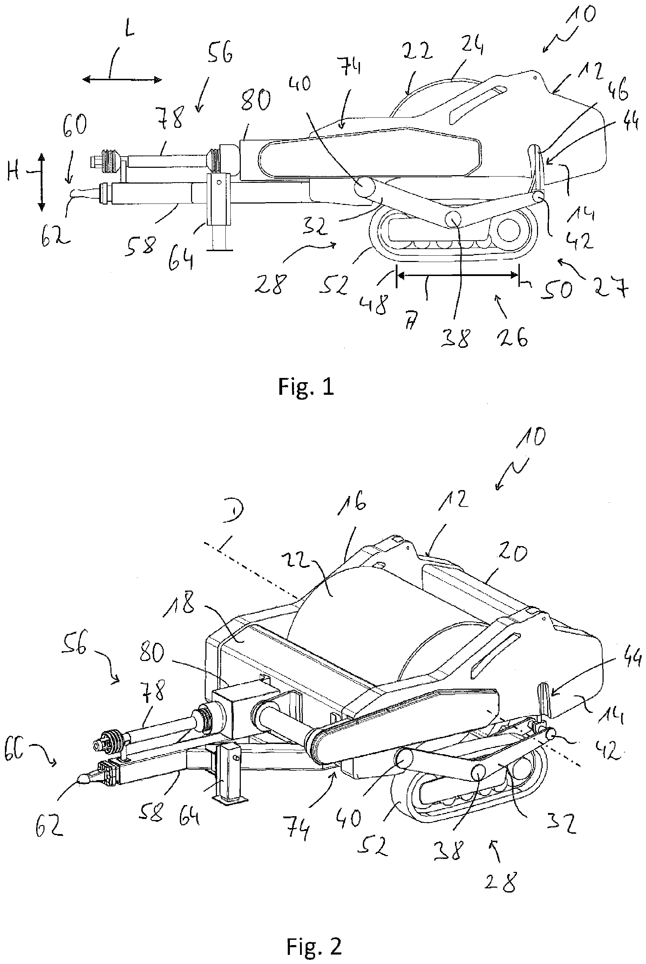

Die Fig. 1 bis 4 zeigen eine allgemein mit 10 bezeichnete Bodenbearbeitungsmaschine, welche, wie nachfolgend noch erläutert, als gezogene, also nicht selbstfahrende Maschine ausgebildet ist.

Die Bodenbearbeitungsmaschine 10 umfasst einen Maschinenrahmen 12 mit zwei in einer Maschinen-Längsrichtung L sich erstreckenden und quer zur Maschinen-Längsrichtung L in Abstand zueinander angeordneten Längsträgern 14, 16. An den in der Maschinen-Längsrichtung L positionierten Endbereichen der Längsträger 14, 16 sind diese beispielsweise durch Verschraubung oder/und Verschweißung mit zwei im Wesentlichen quer zur Maschinen-Längsrichtung L sich erstreckenden und in der Maschinen-Längsrichtung L im Abstand zueinander angeordneten Querträgern 18, 20 verbunden.

In dem von den Längsträgern 14, 16 und Querträgern 18, 20 umschlossenen Innenraum des Maschinenrahmens 12 ist eine Bodenbearbeitungswalze 22, allgemein auch als Bandage bezeichnet, angeordnet. Die Bodenbearbeitungswalze 22 weist im dargestellten Ausgestaltungsbeispiel einen Walzenmantel 24 mit im Wesentlichen glatter, geschlossener Außenkontur auf. Über in den Figuren nicht dargestellte Trägereinheiten ist die Bodenbearbeitungswalze 22 um eine Walzendrehachse D drehbar an den Längsträgern 14, 16 getragen. Es sei an dieser Stelle darauf hingewiesen, dass, abhängig vom Einsatzzweck, die Bodenbearbeitungswalze 22 auch mit anderer Außenkontur, beispielsweise zum Zerbrechen des Untergrunds mit strukturierter oder/und offener Außenkontur, ausgebildet sein kann.

Am Maschinenrahmen 12 ist eine allgemein mit 26 bezeichnete Fahrwerksanordnung vorgesehen, um zur Durchführung eines Bodenbearbeitungsvorgangs die Bodenbearbeitungsmaschine 10 über den zu bearbeitenden Boden bewegen zu können. Die Fahrwerksanordnung 26 stellt im Wesentlichen eine Hubanordnung 27 bereit und umfasst zwei Fahrwerkseinheiten 28, 30. Jede dieser als Raupenfahrwerke 34, 36 ausgebildeten Fahrwerkseinheiten 28, 30 ist in Zuordnung zu einem der beiden Längsträger 14, 16 vorgesehen bzw. an diesem derart getragen, dass die beiden Fahrwerkseinheiten 28, 30 in Richtung der Walzendrehachse D zueinander in Abstand liegen und zwischen sich die Bodenbearbeitungswalze 22 aufnehmen.

Jede der beiden Fahrwerkseinheiten 28, 30 ist am zugeordneten Längsträger 14, 16 im Wesentlichen in einer Höhenrichtung H verstellbar getragen, was bedeutet, dass eine Relativpositionierung zwischen Fahrwerkseinheiten 28, 30 einerseits und Maschinenrahmen 12 andererseits in der Höhenrichtung H veränderbar ist. Hierzu weist jede Fahrwerkseinheit 28, 30 einen beispielsweise zwei Trägerelemente umfassenden Fahrwerksträger 32 auf, wobei die beiden Trägerelemente eines jeweiligen Fahrwerksträgers 32 zwischen sich das Raupenfahrwerk 34 bzw. 36 einer jeweiligen Fahrwerkseinheit 28 bzw. 30 aufnehmen bzw. in einem in der Maschinen-Längsrichtung L näherungsweise zentral am jeweiligen Fahrwerksträger 32 vorgesehenen Kopplungsbereich 38 um eine zur Walzendrehachse D im Wesentlichen parallele Achse schwenkbar tragen.

In einem dem Querträger 18 nahe gelegenen und einen Ankopplungsbereich 40 bereitstellenden Endbereich sind die Fahrwerksträger 32 am zugeordneten Längsträger 14 bzw. 16 um eine zur Walzendrehachse D im Wesentlichen parallele Schwenkachse schwenkbar angebracht. In einem dem Querträger 20 nahe gelegenen und einen Höhenverstellbereich 42 bereitstellenden Endbereich sind die Fahrwerksträger 32 über eine allgemein mit 44 bezeichnete Höhenverstellanordnung bezüglich des jeweils zugeordneten Längsträgers 14, 16 im Wesentlichen in der Höhenrichtung H verstellbar abgestützt. Wie beispielsweise in den Fig. 1 und 2 angedeutet, kann eine derartige Höhenverstellanordnung 44 eine Kolben/ZylinderEinheit 46 umfassen, wobei beispielsweise deren Kolbenstange am Höhenverstellbereich 42 eines jeweiligen Fahrwerkträgers 32 schwenkbar angebracht sein kann, während der in den Figuren nicht erkennbare Zylinder am zugeordneten Längsträger 14 schwenkbar angebracht sein kann.

Es ist darauf hinzuweisen, dass alternativ zur Ausgestaltung der Höhenverstellanordnungen 44 als Kolben/Zylinder-Einheiten 46 diese beispielsweise auch als Spindeleinheiten ausgebildet sein können, bei welchen an einer mit Außengewinde versehenen Spindelstange eine mit Innengewinde ausgebildete Spindelmutter durch Relativdrehbewegung in Längsrichtung der Spindelstange bewegt werden kann. Der Spindelmutter oder der Spindelstange kann ein Antrieb zugeordnet sein, welcher die zum Verändern der Relativlage erforderliche Drehbewegung auslösen kann.

In den Figuren ist zu erkennen, dass die Walzendrehachse D in der Maschinen-Längsrichtung näherungsweise vertikal über dem Kopplungsbereich 38 positioniert ist und somit auch in der Maschinen-Längsrichtung L zwischen einem ersten Aufstandsflächenbereich-Längsende 48 und einem zweiten Aufstandsflächenbereich-Längsende 50 der Fahrwerkseinheiten 28, 30 positioniert ist. Ein derartiger zwischen diesen beiden Aufstandsflächenbereich-Längsenden 48, 50 gebildeter Aufstandsflächenbereich A definiert im Wesentlichen denjenigen Längenbereich, über welchen die Raupenketten 52 der Raupenfahrwerke 34, 36 der Fahrwerkseinheiten 28, 30 in Kontakt mit dem Boden sind. Durch das Positionieren der Walzendrehachse D nahe dem Kopplungsbereich 38 und auch im Aufstandsflächenbereich A wird eine wesentliche Kippmomente vermeidende gleichmäßige Belastung der Raupenfahrwerke 34, 36 der Fahrwerkseinheiten 28, 30 gewährleistet.

Die Fahrwerkseinheiten 28, 30 könnten alternativ jeweils auch mit mehreren in der Maschinen-Längsrichtung L aufeinander folgenden Rädern ausgebildet sein. Bei jeder derartigen mehrere Räder umfassenden Fahrwerkseinheit kann der Aufstandsflächenbereich A gebildet sein durch den zwischen den Aufstandsflächen der beiden in der Maschinen-Längsrichtung L endseitig positionierten Rädern gebildeten und auch diese Aufstandsflächen umfassenden Flächenbereich.

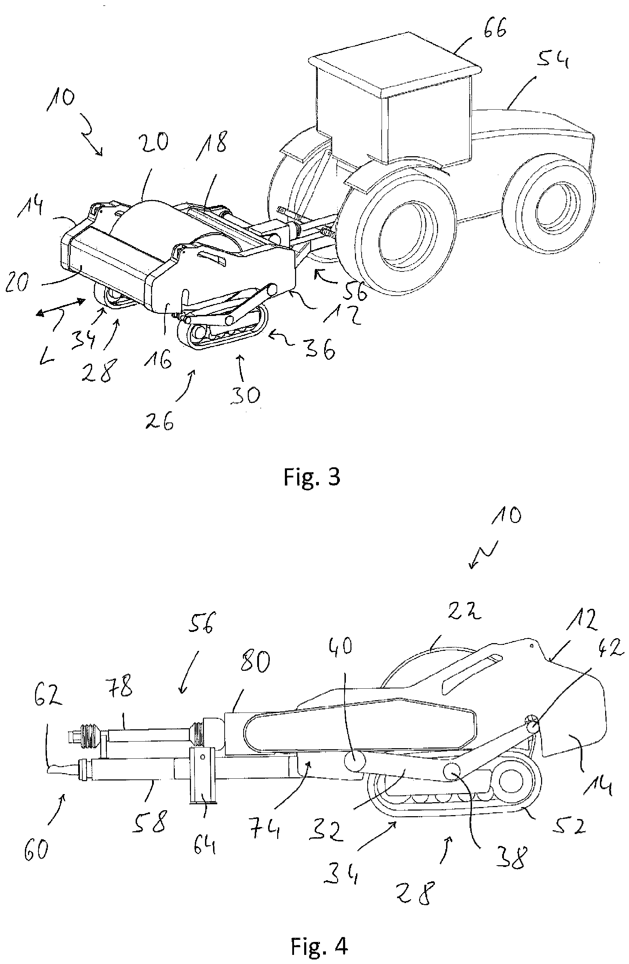

Um die Bodenbearbeitungsmaschine 10 mit einer in Fig. 3 dargestellten Zugmaschine 54 koppeln zu können und somit die Bodenbearbeitungsmaschine 10 durch die im dargestellten Beispiel als Traktor ausgebildete Zugmaschine 54 im Wesentlichen in der Maschinen-Längsrichtung L bewegen zu können, weist die Bodenbearbeitungsmaschine 10 eine allgemein mit 56 bezeichnete Kopplungsanordnung auf. Die Kopplungsanordnung 56 umfasst eine an den Maschinenrahmen 12 starr, d. h. im Wesentlichen unverschwenkbar angebundene Deichseleinheit 58 auf. In ihrem vom Maschinenrahmen 12 entfernten Endbereich trägt die Deichseleinheit 58 eine Kopplungsformation 60, die im dargestellten Beispiel als Kopplungspfanne 62 ausgebildet ist und mit einer an der Zugmaschine 54 vorgesehenen Gegen-Kopplungsformation, die bei Ausgestaltung der Kopplungsformation 60 als Kopplungspfanne 62 als Kopplungskugel ausgebildet ist, nach Art einer Kugelkopf-Anhängerkupplung gekoppelt werden kann. An der Deichseleinheit 58 kann ferner eine Stütze 64 vorgesehen sein, welche im Wesentlichen in der Höhenrichtung H teleskopierbar ist und somit in einem Zustand, in welchem die Kopplungsanordnung 56 nicht an die Zugmaschine 54 angekoppelt ist, die Kopplungsanordnung 56 bzw. die Deichseleinheit 58 derselben abstützen und somit die Deichseleinheit 58 in einer zur Herstellung des Kopplungszustands geeigneten Höhenlage halten kann.

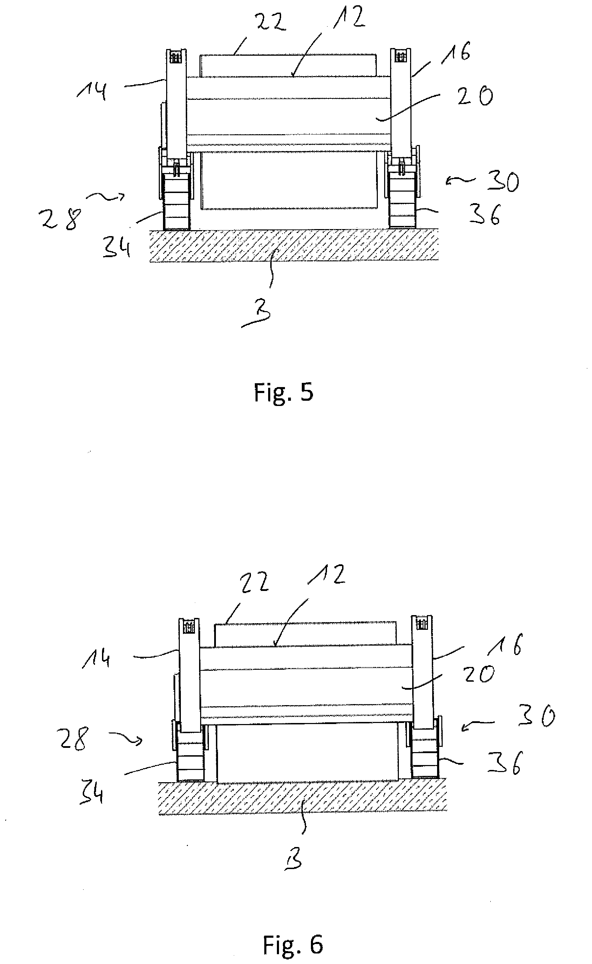

Bei hergestellter Kopplung der Bodenbearbeitungsmaschine 10 mit der Zugmaschine 54 können insbesondere die Kolben/Zylinder-Einheiten 46 der jeweiligen Höhenverstellanordnungen 44 an das Hydrauliksystem der Zugmaschine 54 angekoppelt sein. An der Zugmaschine 54 können Bedienelemente vorgesehen sein, welche es der in einem Bedienstand 66 der Zugmaschine 54 Platz nehmenden Bedienperson ermöglichen, auf die den beiden Fahrwerkseinheiten 28, 30 zugeordneten Höhenverstellanordnungen 44 einzuwirken und deren Höhenlage bezüglich des Maschinenrahmens 12 insbesondere voneinander unabhängig einzustellen. Die Fig. 5 bis 8 zeigen dabei verschiedene im Betrieb der Bodenbearbeitungsmaschine 10 erreichbare Positionierungen der Fahrwerkseinheiten 28, 30 bezüglich des Maschinenrahmens 12.

Die Fig. 5 zeigt einen Zustand, in welchem durch Ausfahren der Kolben/ZylinderEinheiten 46 der Maschinenrahmen 12 bezüglich der Fahrwerkseinheiten 28, 30 beispielsweise in maximalem Ausmaß angehoben ist. Durch das Anheben des Maschinenrahmens 12 wird gleichermaßen auch die an diesem um die Walzendrehachse D drehbar getragene, bezüglich des Maschinenrahmens 12 in ihrer Höhenposition jedoch nicht veränderbare Bodenbearbeitungswalze 22 angehoben, so dass diese außer Kontakt mit dem Boden B ist. In diesem Zustand kann die Bodenbearbeitungsmaschine 10 durch die Zugmaschine 54 beispielsweise zu einem zu bearbeitenden Boden bewegt werden, ohne dass die Bodenbearbeitungswalze 22 dabei in Kontakt mit dem Boden B kommt.

Die Fig. 6 veranschaulicht einen Zustand, in welchem durch Einfahren der Kolben/Zylinder-Einheiten 46 der Maschinenrahmen 12 bezüglich der Fahrwerkseinheiten 28, 30 abgesenkt ist und zwar so weit, dass sowohl die Bodenbearbeitungswalze 22 auf dem Boden B aufsteht, als auch die beiden Fahrwerkseinheiten 28, 30. Somit verteilt sich die durch das Gewicht der gesamten Bodenbearbeitungsmaschine 10 bereitgestellte Last auf denjenigen Oberflächenbereich, in welchem die Bodenbearbeitungswalze 22 in Kontakt mit dem Boden B ist, und denjenigen Oberflächenbereich, in welchem die Raupenketten 52 der Fahrwerkseinheiten 28, 30 in Kontakt mit dem Boden B sind. Ferner kann damit ein Aufschaukeln des Maschinenrahmens 12 unterdrückt werden.

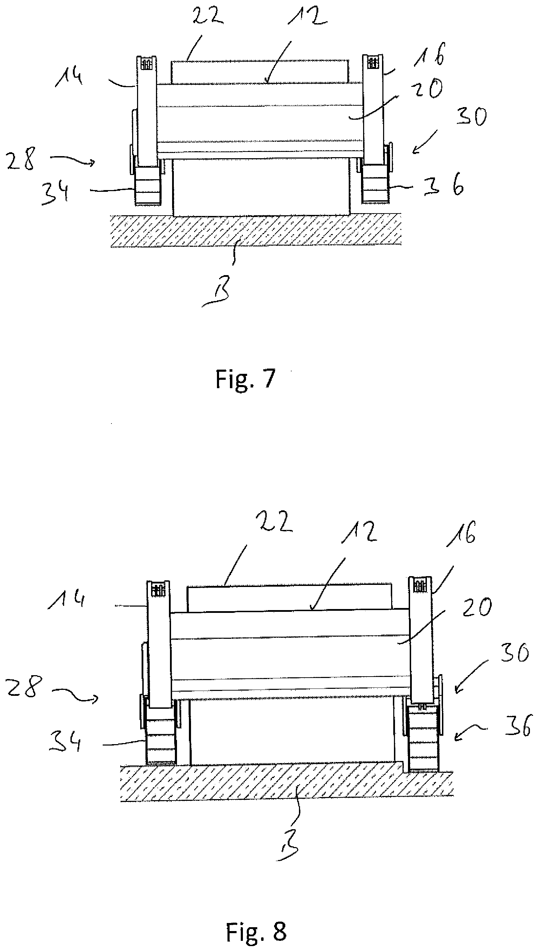

Die Fig. 7 veranschaulicht einen Zustand, in welchem durch weiteres Einfahren der Kolben/Zylinder-Einheiten 46 die beiden Fahrwerkseinheiten 28, 30 bezüglich des Maschinenrahmens 12 so weit angehoben sind, dass sie den Boden B nicht mehr berühren. In diesem Zustand ist im Wesentlichen das gesamte Gewicht der Bodenbearbeitungsmaschine 10 über die Bodenbearbeitungswalze 22 auf dem Boden B abgestützt, so dass in diesem Zustand die durch die Bodenbearbeitungswalze 22 auf den Boden B ausgeübte Auflagelast einer Maximal-Auflagelast der Bodenbearbeitungswalze 22 entspricht.

Die Fig. 8 veranschaulicht einen Zustand, in welchem, in einer dem Zustand der Fig. 6 entsprechenden Art und Weise, die durch die Bodenbearbeitungswalze 22 auf den Boden B ausgeübte Auflagelast gegenüber der Maximal-Auflagelast dadurch gemindert ist, dass ein Teil des Gewichts der Bodenbearbeitungsmaschine 10 über die Fahrwerkseinheiten 28, 30 getragen bzw. bezüglich des Bodens B abgestützt ist. Der Boden B in Fig. 8 ist jedoch uneben. Um quer zur Maschinen-Längsrichtung L, also in Richtung der Walzendrehachse D, eine gleichmäßige Lastverteilung zu erreichen, ist bei der in Fig. 8 rechts dargestellten Fahrwerkseinheit 30 die Kolben/Zylinder-Einheit 46 weiter ausgefahren, als bei der in Fig. 8 links dargestellten Fahrwerkseinheit 28, so dass, angepasst an den vorhandenen Niveauunterschied im Boden B, die beiden Fahrwerkseinheiten 28, 30 unterschiedlich weit bezüglich des Maschinenrahmens 12 der Bodenbearbeitungsmaschine 10 abgesenkt bzw. angehoben sind und der Maschinenrahmen 12 bzw. die Bodenbearbeitungswalze 22 im Wesentlichen parallel zu dem unter dieser liegenden Bereich des Bodens B positioniert werden kann. Derartige Niveauunterschiede können beispielsweise auch dann auftreten, wenn auf vergleichsweise weichem Boden die einen Teil der Auflagelast aufnehmenden Fahrwerkseinheiten 28, 30 verschieden stark in den Boden B einsinken, was durch entsprechendes Ansteuern der diesem zugeordneten Kolben/Zylinder-Einheiten 46 kompensiert werden kann.

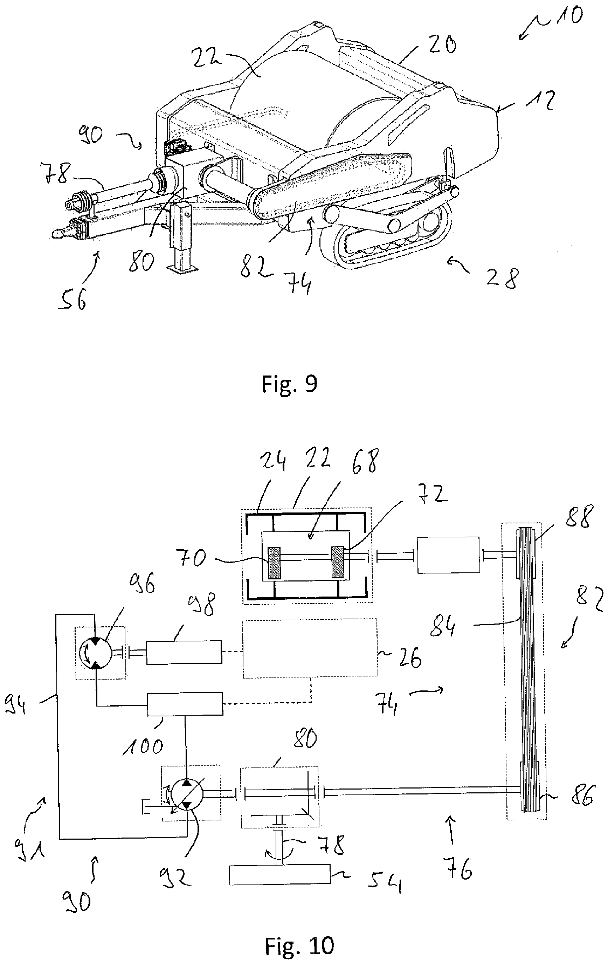

Die Fig. 9 und 10 veranschaulichen, dass der Bodenbearbeitungswalze 22 ein allgemein mit 68 zugeordneter Schwingungsmechanismus zugeordnet sein kann. Der Schwingungsmechanismus 68 umfasst im dargestellten Beispiel zwei im Inneren der Bodenbearbeitungswalze 22 angeordnete und beispielsweise um die Walzendrehachse D drehbare Unwuchtmassen 70, 72. Werden die Unwuchtmassen 70, 72 durch einen allgemein mit 74 bezeichneten Unwuchtantrieb zur Drehung um die Walzendrehachse A angetrieben, so erzeugen sie eine im Wesentlichen orthogonal zur Walzendrehachse wirkende Kraft, durch welche die Bodenbearbeitungswalze 22 entsprechend orthogonal zur Walzendrehachse D beschleunigt wird. Aufgrund einer derartigen, auch als Vibration bezeichneten Krafteinwirkung wird bei Durchführung eines Bodenbearbeitungsvorgangs eine über die statische Auflagelast der Bodenbearbeitungswalze 22 hinaus gehende verstärkte Wechselwirkung zwischen der Bodenbearbeitungswalze 22 und dem durch diese zu bearbeitenden Boden erreicht, was insbesondere beim Verdichten insbesondere dann, wenn eine derartige Beschleunigung bzw. Kraftwirkung im Wesentlichen in vertikaler Richtung, also in der Höhenrichtung H bereitgestellt wird, vorteilhaft ist.

Bei dem in den Fig. 1 bis 10 dargestellten Aufbau der Bodenbearbeitungsmaschine 10 ist der Unwuchtantrieb 74 als rein mechanischer Übertragungsmechanismus 76 ausgebildet. Dieser umfasst eine an eine Zapfwelle der Zugmaschine 54 ankoppelbare Antriebswelle 78, eine als Winkelgetriebe ausgebildete Getriebeanordnung 80 und einen Riementrieb 82 mit einem Übertragungsriemen 84 zwischen einer an das Getriebe 80 angekoppelten Antriebsscheibe 86 und einer an die Unwuchtmassen 70, 72 angekoppelten Abtriebsscheibe 88. Somit kann durch ein an der Zugmaschine 54 vorgesehenes Antriebsaggregat, beispielsweise eine Dieselmaschine, die zum Antreiben der Unwuchtmassen 70, 72 erforderliche Energie bereitgestellt bzw. über den mechanischen Übertragungsmechanismus 76 von der Zapfwelle der Zugmaschine 54 abgegriffen und in die Unwuchtmassen 70, 72 eingeleitet werden.

Während bei der in den Fig. 1 bis 4 dargestellten Ausgestaltung die Bodenbearbeitungsmaschine 10 mit frei laufenden Fahrwerkseinheiten 28, 30 ausgebildet ist, also die gesamte die Bodenbearbeitungsmaschine 10 in der Maschinen-Längsrichtung L bewegende Energie bzw. Kraft durch die diese ziehende bzw. auch schiebende Zugmaschine 54 aufgebracht und über die Kopplungsanordnung 56 übertragen wird, ist bei dem in den Fig. 9 und 10 dargestellten Aufbau der Fahrwerksanordnung 26, also den beiden Fahrwerkseinheiten 28, 30 derselben, ein als Fahrwerks-Druckfluidantrieb 91 ausgebildeter Fahrwerksantrieb 90 zugeordnet. Dieser umfasst eine an das Getriebe 80 angekoppelte Druckfluidpumpe 92, vorzugsweise mit veränderbarem Fördervolumen, einen Druckfluidkreislauf 94 sowie einen mit dem im Druckfluidkreislauf 94 zirkulierenden Druckfluid beaufschlagbaren Druckfluidmotor 96. Wie durch einen Block 98 angedeutet, ist der Druckfluidmotor 96 an ein jeweiliges Raupenfahrwerk 34, 36 der Fahrwerksanordnung 26 angekoppelt, um somit die jeweilige Raupenkette 52 zur Bewegung anzutreiben. Es ist selbstverständlich, dass bei jeder der beiden Fahrwerkseinheiten 28, 30 ein derartiger in Zuordnung zum jeweiligen Raupenfahrwerk 34, 36 wirkender Druckfluidmotor 96 vorgesehen ist.

Wie durch einen Block 100 veranschaulicht, kann das im Druckfluidkreislauf 94 bereitgestellte Druckfluid auch für weitere Funktionen genutzt werden. So kann beispielsweise dieses Druckfluid auch genutzt werden, um zum Anheben bzw. Absenken des Maschinenrahmens 12 bezüglich der Fahrwerkseinheiten 28, 30 die diesen jeweils zugeordneten Kolben/Zylinder-Einheiten 46 auszufahren bzw. einzufahren. Hierzu können diesen Kolben/Zylinder-Einheiten 46 jeweilige Ventile zugeordnet sein, die durch die bereits angesprochenen Bedienelemente an der Zugmaschine 54 zur Zufuhr bzw. Abfuhr von Druckfluid zu bzw. aus den Kolben/Zylinder-Einheiten 46 aktiviert werden können. Auch kann das Druckfluid genutzt werden, um an den jeweiligen Raupenfahrwerken 34, 36 vorgesehene Spannsysteme für die Raupenketten 52 derselben zu aktivieren oder/und jeweilige Betriebsbremsen der Raupenfahrwerke 34, 36 zu aktivieren.

Es sei darauf hingewiesen, dass bei einer alternativen Ausgestaltung, wie vorangehend bereits dargelegt, zum Betreiben all dieser mit Druckfluid arbeitenden Systembereiche auch direkt auf einen Druckfluidkreislauf der Zugmaschine 54 zugegriffen werden kann, also eine der Druckfluidpumpe 92 entsprechende Druckfluidpumpe an der Zugmaschine 54 vorgesehen sein kann, um das für den Druckfluidkreislauf 94 erforderliche Druckfluid bereitzustellen.

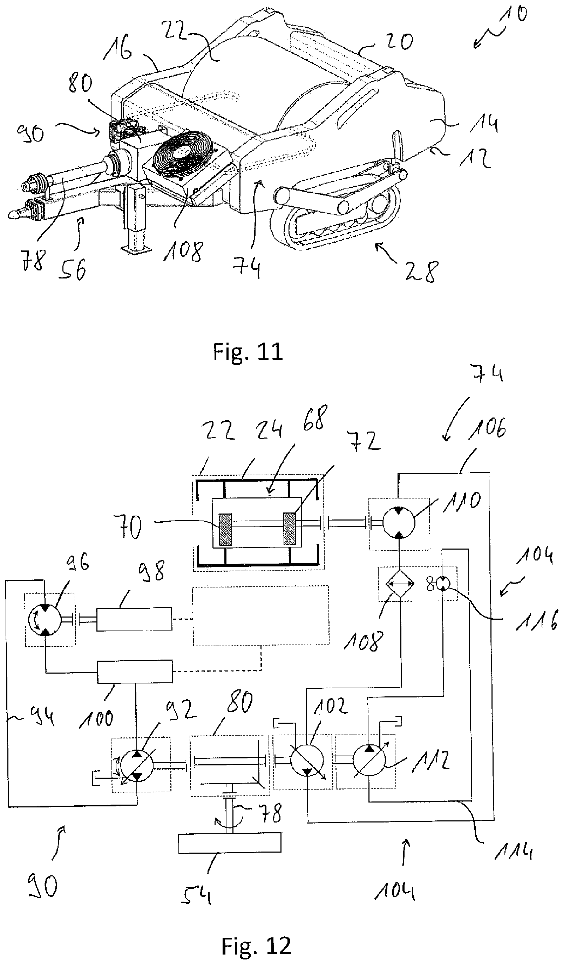

Bei einer in den Fig. 11 und 12 dargestellten alternativen Ausgestaltungsform arbeitet auch der Unwuchtantrieb 74 mit Druckfluid. An das Getriebe 80 ist eine Druckfluidpumpe 102 des Unwucht-Druckfluidantriebs 104 angekoppelt. Ein Druckfluidkreislauf 106 führt das Druckfluid beispielsweise über eine Kühleranordnung 108 zu bzw. von einem Druckfluidmotor 110. Dieser wiederum ist an die Unwuchtmassen 70, 72 angekoppelt und kann diese zur Drehung antreiben. Eine weitere Druckfluidpumpe 112 fördert Druckfluid in einem weiteren Druckfluidkreislauf 114 zu einer Gebläseeinheit 116, welche Kühlluft durch die Kühleranordnung 108 fördern kann.

Ein Vorteil dieser Ausgestaltung liegt darin, dass insbesondere bei Ausgestaltung der Druckfluidpumpe 102 mit einstellbarem Fördervolumen die Drehzahl des Druckfluidmotors 110 und somit auch die Drehzahl der Unwuchtmassen 70, 72 einfach und präzise und insbesondere auch unabhängig von der Drehzahl eines Antriebsaggregats der Zugmaschine 54 eingestellt werden kann. Dies ermöglicht es, den Schwingungsmechanismus 68 mit einer für einen jeweils durchzuführenden Bodenbearbeitungsvorgang geeigneten Drehzahl der Unwuchtmassen 70, 72 und somit einer geeigneten Schwingungsfrequenz zu betreiben.

Es ist selbstverständlich, dass ein derartiger den Druckfluidkreislauf 106 einbeziehender Aufbau des Unwuchtantriebs 74 auch benutzt werden kann, wenn, wie in den Fig. 1 bis 4 dargestellt, den Fahrwerkseinheiten 28, 30 kein Fahrwerksantrieb zugeordnet ist. Ferner ist darauf hinzuweisen, dass selbstverständlich dann, wenn an der Bodenbearbeitungsmaschine 10 mehrere mit Druckfluid zu betreibende Systembereiche vorhanden sind, wie z. B. der Fahrwerksantrieb 90 einerseits und der Unwuchtantrieb 74 andererseits, ein Teil dieser Systembereiche zur Bereitstellung des Druckfluids direkt an den Druckfluidkreislauf der Zugmaschine 54 angekoppelt sein kann, während ein anderer Teil dieser Systembereiche durch einen ausschließlich an der Bodenbearbeitungsmaschine 10 vorgesehenen Druckfluidkreislauf betrieben wird, dessen Druckfluidpumpe oder Druckfluidpumpen mechanisch beispielsweise über die Ankopplung an eine Zapfwelle an der Zugmaschine 54 betrieben werden kann.

Mit einer Bodenbearbeitungsmaschine, wie sie vorangehend beschrieben wurde, können im Bodenbearbeitungsbetrieb verschiedene besonders vorteilhafte Zustände eingestellt werden. So kann, wie vorangehend insbesondere mit Bezug auf die Fig. 12 beschrieben, ein Einfluss auf die Betriebscharakteristik der Bodenbearbeitungswalze 22 durch Einstellen bzw. Variieren der Drehzahl der Unwuchtmassen 70, 72 und somit der durch den Schwingungsmechanismus 68 bereitgestellten Schwingungsfrequenz erreicht werden.

Das Inbetriebsetzen des Schwingungsmechanismus 68 kann derart erfolgen, dass am Beginn eines Bodenbearbeitungsvorgangs die Bodenbearbeitungswalze 22 beispielsweise in die in Fig. 5 dargestellte Positionierung gebracht wird, in welcher sie keinen Kontakt zu dem zu bearbeitenden Boden B hat. In diesem Zustand kann dann begonnen werden, ein Antriebsdrehmoment auf die Unwuchtmassen 70, 72 zu leiten und deren Drehzahl beispielsweise in Richtung zu der für den Bodenbearbeitungsbetrieb vorzusehenden Drehzahl zu bringen. Da in diesem Zustand die Bodenbearbeitungswalze 22 keinen Kontakt zum Boden B hat, wird keine durch den Schwingungsmechanismus 68 bereits auch beim Anheben der Drehzahl der Unwuchtmassen 70, 72 bereitgestellte Schwingungsenergie in den Boden B dissipiert. Dies hat zur Folge, dass die zum Erreichen der für den Bodenbearbeitungsbetrieb gewünschten bzw. vorgegebenen Soll-Drehzahl aufzubringende Energie gesenkt werden kann bzw. die Soll-Drehzahl schneller erreicht werden kann. Ist die Bodenbearbeitungswalze 10 dann in oder nahe dem für den durchzuführenden Bearbeitungsvorgang vorzusehenden Zustand, können die Fahrwerkseinheiten 28, 30 bezüglich des Maschinenrahmens 12 angehoben werden und der Maschinenrahmen 12 somit in Richtung auf den Boden B zu abgesenkt werden, so dass für den dann durchzuführenden Bearbeitungsvorgang die Bodenbearbeitungswalze 22 in Kontakt mit dem zu bearbeitenden Boden kommt.

Es ist darauf hinzuweisen, dass in dieser Startphase eines Bodenbearbeitungsvorgangs beispielsweise auch der in den Fig. 6 bzw. 8 dargestellte Zustand eingestellt werden kann, in welchem die Bodenbearbeitungswalze 22 zwar in Kontakt mit dem unter dieser liegenden Boden B ist, jedoch nur ein Teil der Auflagelast über die Bodenbearbeitungswalze 22 bereitgestellt wird. Auch in diesem Zustand kann in der Startphase der Energieübertrag von der Bodenbearbeitungswalze 22 in den Boden B gemindert werden und somit die für das Aktivieren des Schwingungsmechanismus 68 erforderliche Energie gesenkt werden.

Am Beginn des durchzuführenden Bodenbearbeitungsvorgangs bzw. auch während eines derartigen Bodenbearbeitungsvorgangs kann dann durch Einstellen der Höhenlage der beiden Fahrwerkseinheiten 28, 30 bezüglich des Maschinenrahmens 12 die Auflagelast der Bodenbearbeitungswalze 22 eingestellt bzw. variiert werden. Werden beispielsweise die Fahrwerkseinheiten 28 in den in Fig. 7 dargestellten Zustand gebracht, stellt die Bodenbearbeitungswalze 22 die Maximal-Auflagelast bereit, so dass im Wesentlichen das gesamte Gewicht der Bodenbearbeitungsmaschine 10 über die Bodenbearbeitungswalze 22 auf dem Boden B abgestützt wird. In diesem Zustand ist die Wechselwirkung der Bodenbearbeitungswalze 22 und insbesondere dem darin vorgesehenen Schwingungsmechanismus 68 mit dem Boden B maximal, während in dem in Fig. 5 dargestellten Zustand, in welchem die Bodenbearbeitungswalze 22 keinen Kontakt zum Boden B hat, diese Wechselwirkung minimal, nämlich bei Null ist. Durch Variieren der durch die Fahrwerkseinheiten 28, 20 bereitgestellten Auflagelast wird es dann möglich, diese Wechselwirkung der Bodenbearbeitungswalze 22 mit dem Boden B zwischen einem minimalen Wert, nämlich dem Wert Null (Zustand der Fig. 5) und einem im Zustand der Fig. 7 erreichten maximalen Wert zu variieren. Auf diese Art und Weise kann zusätzlich zu der Variation der Schwingungsfrequenz auch das Vermögen, Schwingungsenergie in den Boden B einzuleiten, eingestellt bzw. variiert werden, so dass beispielsweise dann, wenn ein größerer Anteil der Auflagelast durch die Fahrwerkseinheiten 28, 30 bereitgestellt wird, nur im Bereich der Schwingungsamplitudenspitzen der Bodenbearbeitungswalze 22 bzw. des Schwingungsmechanismus 68 ein wesentlicher Eintrag von Schwingungsenergie in den Boden B erfolgt. Dieser Zustand kann insbesondere dann erreicht werden, wenn die Bodenbearbeitungswalze 22 durch die Fahrwerkseinheiten 28, 30 in geringem Abstand zum Boden B gehalten ist und durch die vermittels des Schwingungsmechanismus 68 generierten Schwingungen die Bodenbearbeitungswalze 22 periodisch auf und ab bewegt wird und nur bei maximaler Auslenkung periodisch schlagend in Kontakt mit dem Boden B kommt.

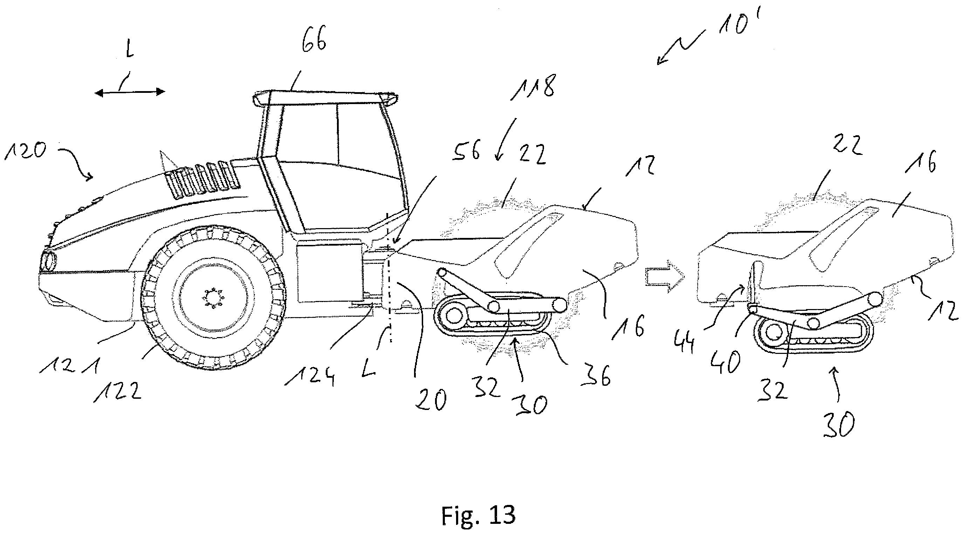

Die Fig. 13 veranschaulicht die vorangehend mit Bezug auf eine nicht selbstfahrende Bodenbearbeitungsmaschine erläuterten Prinzipien der vorliegenden Erfindung anhand einer als so genannter Walzenzug ausgebildeten selbstfahrenden Bodenbearbeitungsmaschine 10'.

Diese Bodenbearbeitungsmaschine 10' umfasst einen Vorderwagen 118, der im Wesentlichen den vorangehend beschriebenen Maschinenrahmen 12 umfasst bzw. durch diesen bereitgestellt ist. An dem Maschinenrahmen 12 ist die Bodenbearbeitungswalze 22 um die Walzendrehachse drehbar getragen. Der Maschinenrahmen 12 trägt an dessen Längsträgern, von welchen in der Fig. 13 nur der Längsträger 16 erkennbar ist, die Fahrwerkseinheiten, von welchen in Fig. 13 die dem Längsträger 16 zugeordnete Fahrwerkseinheit 30 mit deren Raupenfahrwerk 36 zu sehen ist. Bei dem in Fig. 13 dargestellten Ausgestaltungsbeispiel ist die Bodenbearbeitungswalze mit einer Vielzahl von am Außenumfang derselben vorgesehenen Meißeln als Brecherwalze ausgebildet und kann eingesetzt werden, um einen beispielsweise gesteinsartigen Boden aufzubrechen.

Die Bodenbearbeitungsmaschine 10' umfasst ferner einen einen weiteren Maschinenrahmen 121 bereitstellenden Hinterwagen 120, an welchem ein Antriebsaggregat, beispielsweise eine Dieselbrennkraftmaschine, vorgesehen ist. Zum Bewegen der Bodenbearbeitungsmaschine 10' in der Maschinen-Längsrichtung L sind im dargestellten Beispiel am Hinterwagen 120 angetriebene Räder 122 vorgesehen. Anstelle der an beiden Seiten des Hinterwagens 120 vorgesehenen angetriebenen Räder 122 könnte an diesem auch eine weitere, durch das Antriebsaggregat zur Drehung und somit zum Voranbewegen der Bodenbearbeitungsmaschine 10' antreibbare Bodenbearbeitungswalze vorgesehen sein.

Die Kopplungsanordnung 56 der Bodenbearbeitungsmaschine 10 umfasst eine Lenk-Gelenksanordnung 124, über welche der Maschinenrahmen 12 bzw. der Vorderwagen 118 um eine Lenk-Schwenkachse L schwenkbar an den Hinterwagen 120 angekoppelt ist. Die Lenk-Schwenkbewegung kann durch eine oder mehrere zwischen dem Vorderwagen 118 und dem Hinterwagen 120 wirkende Kolben/Zylinder-Einheiten hervorgerufen werden, so dass durch Verschwenken des Vorderwagens 118 bezüglich des Hinterwagens 120 die selbstfahrende Bodenbearbeitungsmaschine 10' gelenkt werden kann.

Auch bei der in Fig. 13 dargestellten selbstfahrenden Bodenbearbeitungsmaschine 10 kann durch die in dieser Figur dargestellte Variation der Höhenlage der Fahrwerkseinheiten bezüglich des Maschinenrahmens 12 der Maschinenrahmen 12 und mit diesem die am Maschinenrahmen 12 drehbar getragene Bodenbearbeitungswalze 22 bezüglich des darunter liegenden Bodens angehoben bzw. abgesenkt werden, um, so wie vorangehend mit Bezug auf die Fig. 5 bis 8 beschrieben, die verschiedenen Positionierungen der Bodenbearbeitungswalze 22 bezüglich des Bodens und somit auch die verschiedenen vorangehend beschriebenen Betriebszustände insbesondere am Beginn eines Bodenbearbeitungsvorgangs und auch während eines Bodenbearbeitungsvorganges einstellen bzw. verändern zu können. Dabei kann die Einleitung von Energie insbesondere zum Antreiben der Unwuchtmassen des Schwingungsmechanismus in herkömmlicher Art und Weise erfolgen, wie es bei derartigen insbesondere als Vibrationswalzen ausgebildeten Bodenbearbeitungsmaschinen mit einem im Inneren einer Bodenbearbeitungswalze angeordneten Schwingungsmechanismus bekannt ist. Es kann also einem derartigen Schwingungsmechanismus ein beispielsweise durch Druckfluid antreibbarer Antriebsmotor zugeordnet sein.

## Patentansprüche

1. Bodenbearbeitungsmaschine, umfassend:
- einen Maschinenrahmen (12) mit zwei quer zu einer Maschinen-Längsrichtung (L) in Abstand zueinander angeordneten, sich im Wesentlichen in der Maschinen-Längsrichtung (L) erstreckenden Längsträgern (14, 16) und zwei in der Maschinen-Längsrichtung (L) in Abstand zueinander angeordneten, sich im Wesentlichen quer zur Maschinen-Längsrichtung (L) erstreckenden Querträgern (18, 20),
- eine in der Maschinen-Längsrichtung (L) zwischen den Querträgern (18, 20) an den Längsträgern (14, 16) um eine Walzendrehachse (D) drehbar getragene Bodenbearbeitungswalze (22),
- eine Kopplungsanordnung (56) zur Ankopplung des Maschinenrahmens (12) an einen weiteren Maschinenrahmen (121) der Bodenbearbeitungsmaschine (10') oder an eine weitere Maschine (54),
- eine Fahrwerksanordnung (26), wobei die Fahrwerksanordnung (26) eine Mehrzahl von an dem Maschinenrahmen (12) höhenverstellbar getragenen Fahrwerkseinheiten (28, 30) umfasst,
**dadurch gekennzeichnet,**
**dass** die Fahrwerksanordnung (26) eine Mehrzahl von voneinander unabhängig höhenverstellbaren Fahrwerkseinheiten (28, 30) umfasst.

2. Bodenbearbeitungsmaschine nach Anspruch 1,
**dadurch gekennzeichnet, dass** die Fahrwerksanordnung (26) beidseits der Bearbeitungswalze (22) in Zuordnung zu jedem Längsträger (14, 16) jeweils eine an dem Längsträger (14, 16) getragene Fahrwerkseinheit (28, 30) umfasst.

3. Bodenbearbeitungsmaschine nach Anspruch 1 oder 2,
**dadurch gekennzeichnet, dass** jede Fahrwerkseinheit (28, 30) in einem Ankopplungsbereich (40) an den zugeordneten Längsträger (14, 16) schwenkbar angekoppelt ist und in einem bezüglich des Ankopplungsbereichs (40) in der Maschinen-Längsrichtung (L) in Abstand angeordneten Höhenverstellbereich (42) bezüglich des zugeordneten Längsträgers (14, 16) über eine Höhenverstellanordnung (44) höhenverstellbar abgestützt ist.

4. Bodenbearbeitungsmaschine nach Anspruch 3,
**dadurch gekennzeichnet, dass** die Höhenverstellanordnung (44) eine Kolben/Zylinder-Einheit (46) oder eine Spindeleinheit umfasst.

5. Bodenbearbeitungsmaschine nach Anspruch 4,
**dadurch gekennzeichnet, dass** jede Fahrwerkseinheit (28, 30) einen in dem Ankopplungsbereich (40) an den Längsträger (14, 16) schwenkbar angekoppelten und in dem Höhenverstellbereich (42) mit der Höhenverstellanordnung (44) gekoppelten Fahrwerksträger (32) umfasst.

6. Bodenbearbeitungsmaschine nach einem der Ansprüche 1-5,
**dadurch gekennzeichnet, dass** jede Fahrwerkseinheit (28, 30) einen in der Maschinen-Längsrichtung (L) sich erstreckenden Bodenbearbeitungsmaschinen-Aufstandsflächenbereich (A) aufweist, und dass die Walzendrehachse (D) in der Maschinen-Längsrichtung (L) zwischen einem ersten Aufstandsflächenbereich-Längsende (48) und einem zweiten Aufstandsflächenbereich-Längsende (50) positioniert ist.

7. Bodenbearbeitungsmaschine nach einem der Ansprüche 1-6,
**dadurch gekennzeichnet, dass** jede Fahrwerkseinheit (28, 30) ein Raupenfahrwerk (34, 36) umfasst.

8. Bodenbearbeitungsmaschine nach 5 und Anspruch 7,
**dadurch gekennzeichnet, dass** das Raupenfahrwerk (34, 36) an den Fahrwerksträger (32) im Wesentlichen frei schwenkbar angekoppelt ist.

9. Bodenbearbeitungsmaschine nach einem der vorangehenden Ansprüche, **dadurch gekennzeichnet, dass** der Bodenbearbeitungswalze (22) ein Schwingungsmechanismus (68) mit wenigstens einer im Inneren der Bodenbearbeitungswalze (22) angeordneten, um eine Unwucht-Drehachse drehbaren Unwuchtmasse (70, 72) zugeordnet ist.

10. Bodenbearbeitungsmaschine nach Anspruch 9,
**dadurch gekennzeichnet, dass** der wenigstens einen Unwuchtmasse (70, 72) ein Unwuchtantrieb (74) zugeordnet ist.

11. Bodenbearbeitungsmaschine nach Anspruch 10,
**dadurch gekennzeichnet, dass** der Unwuchtantrieb (74) einen Unwucht-Druckfluidantrieb (104) mit einer Druckfluidpumpe (102) und einem mit der Druckfluidpumpe (102) über einen Druckfluidkreislauf (106) gekoppelten Druckfluidmotor (110) umfasst.

12. Bodenbearbeitungsmaschine nach Anspruch 10 oder 11,
**dadurch gekennzeichnet, dass** der Unwuchtantrieb (74) einen ein Antriebsdrehmoment von einem Antriebsmotor auf die wenigstens eine Unwuchtmasse (70, 72) übertragenden mechanischen Übertragungsmechanismus (76), vorzugsweise umfassend einen Riementrieb (82), umfasst.

13. Bodenbearbeitungsmaschine nach einem der vorangehenden Ansprüche, **dadurch gekennzeichnet, dass** der Fahrwerksanordnung (26) ein Fahrwerksantrieb (90) zum Antreiben der Bodenbearbeitungsmaschine (10) in der Maschinen-Längsrichtung (L) zugeordnet ist.

14. Bodenbearbeitungsmaschine nach Anspruch 13,
**dadurch gekennzeichnet, dass** der Fahrwerksantrieb (90) einen Fahrwerks-Druckfluidantrieb (91) mit einer Druckfluidpumpe (92) und einem mit der Druckfluidpumpe (92) über einen Druckfluidkreislauf (94) gekoppelten Druckfluidmotor (96) umfasst.

15. Bodenbearbeitungsmaschine nach einem der vorangehenden Ansprüche,
**dadurch gekennzeichnet, dass** die Bodenbearbeitungsmaschine (10) zum Bewegen in der Maschinen-Längsrichtung (L) vermittels der Kopplungsanordnung (56) an eine Zugmaschine (54) ankoppelbar ist.

16. Bodenbearbeitungsmaschine nach Anspruch 15,
**dadurch gekennzeichnet, dass** die Kopplungsanordnung (56) eine mit dem Maschinenrahmen (12) vorzugsweise starr verbundene Deichseleinheit (58) mit einer Kopplungsformation (60), vorzugsweise Kopplungspfanne (62), zur Ankopplung an eine an der Zugmaschine (54) vorgesehene Gegen-Kopplungsformation, vorzugsweise Kopplungskugel, umfasst.

17. Bodenbearbeitungsmaschine nach Anspruch 10 und Anspruch 15 oder 16,
**dadurch gekennzeichnet, dass** der Unwuchtantrieb (74) an ein Antriebsaggregat der Zugmaschine (54) ankoppelbar ist.

18. Bodenbearbeitungsmaschine nach Anspruch 13 und einem der Ansprüche 15-17,
**dadurch gekennzeichnet, dass** der Fahrwerksantrieb (90) an ein Antriebsaggregat der Zugmaschine (54) ankoppelbar ist.

19. Bodenbearbeitungsmaschine nach einem der Ansprüche 1-14,
**dadurch gekennzeichnet, dass** an dem einen Hinterwagen (120) der Bodenbearbeitungsmaschine (10') bereitstellenden weiteren Maschinenrahmen (121) ein Antriebsaggregat vorgesehen ist, und dass die Kopplungsanordnung (56) eine Lenk-Gelenksanordnung (124) zur schwenkbaren Kopplung des wenigstens einen Teil eines Vorderwagens (118) der Bodenbearbeitungsmaschine (10') bereitstellenden Maschinenrahmens (12) mit dem weiteren Maschinenrahmen (121) um eine Lenk-Schwenkachse (L) umfasst.

20. Bodenbearbeitungszug, umfassend eine Zugmaschine (54) und eine an die Zugmaschine (54) angekoppelte Bodenbearbeitungsmaschine (10) nach einem der Ansprüche 1-18.

21. Verfahren zum Betreiben einer Bodenbearbeitungsmaschine nach Anspruch 9 oder einem der Ansprüche 10-19, sofern auf Anspruch 9 rückbezogen, die Bodenbearbeitungsmaschine (10; 10') umfassend eine Hubanordnung (27), wobei durch die Hubanordnung (27) die Bodenbearbeitungswalze (22) in und außer Kontakt mit einem unter der Bodenbearbeitungswalze (22) liegenden Boden (B) positionierbar ist oder/und eine durch die Bodenbearbeitungswalze (22) auf den unter der Bodenbearbeitungswalze (22) liegenden Boden (B) ausgeübte Auflagelast veränderbar ist,
wobei das Verfahren die Maßnahmen umfasst:
a) am Beginn eines Bodenbearbeitungsvorgangs, Betreiben der Hubanordnung (27) zum Positionieren der Bodenbearbeitungswalze (22) derart, dass diese außer Kontakt mit dem unter dieser liegenden Boden (B) ist oder eine durch diese auf den unter dieser liegenden Boden (B) ausgeübte Auflagelast bezüglich einer Maximal-Auflagelast verringert ist,
b) nach Durchführung der Maßnahme a), in Betrieb Setzen des Schwingungsmechanismus (68),
c) nach Durchführung der Maßnahme b), Betreiben der Hubanordnung (27) derart, dass die Bodenbearbeitungswalze (22) in Kontakt mit dem unter dieser liegenden Boden (B) kommt oder eine durch die Bodenbearbeitungswalze (B) auf den unter dieser liegenden Boden (B) ausgeübte der Auflagelast erhöht wird.

22. Verfahren zum Betreiben einer Bodenbearbeitungsmaschine nach Anspruch 9 oder einem der Ansprüche 10-19, sofern auf Anspruch 9 rückbezogen, die Bodenbearbeitungsmaschine (10; 10') umfassend eine Hubanordnung (27), wobei durch die Hubanordnung (27) die Bodenbearbeitungswalze (22) in und außer Kontakt mit einem unter der Bodenbearbeitungswalze (22) liegenden Boden (B) positionierbar ist oder/und eine durch die Bodenbearbeitungswalze (22) auf den unter der Bodenbearbeitungswalze (22) liegenden Boden (B) ausgeübte Auflagelast veränderbar ist,
wobei das Verfahren die folgende Maßnahme umfasst:
d) zur Durchführung eines Bodenbearbeitungsvorgangs mit in Betrieb gesetztem Schwingungsmechanismus (68), Betreiben der Hubanordnung (27) derart, dass eine durch die Bodenbearbeitungswalze (22) auf den unter dieser liegenden Boden (B) ausgeübte Auflagelast bezüglich einer Maximal-Auflagelast verringert ist,

23. Verfahren nach Anspruch 22, **dadurch gekennzeichnet, dass** das Verfahren ferner die folgende Maßnahme umfasst:
e) während der Durchführung eines Bodenbearbeitungsvorgangs mit in Betrieb gesetztem Schwingungsmechanismus (68), Betreiben der Hubanordnung (27) derart, dass eine durch die Bodenbearbeitungswalze (22) auf den unter dieser liegenden Boden (B) ausgeübte Auflagelast verändert wird.

24. Verfahren nach einem der Ansprüche 21-23, **dadurch gekennzeichnet, dass** die Hubanordnung (27) die Fahrwerksanordnung (26) umfasst.

## Claims

1. A soil processing machine, comprising:
- a machine frame (12) having two longitudinal members (14, 16) disposed spaced from each other transversely to a machine longitudinal direction (L), extending substantially in the machine longitudinal direction (L), and two transverse members (18, 20) disposed spaced from each other in the machine longitudinal direction (L), extending substantially transversely to the machine longitudinal direction (L),
- a soil processing roller (22) rotatably supported about a roller rotational axis (D) in the machine longitudinal direction (L) between the transverse members (18, 20) on the longitudinal members (14, 16),
- a coupling assembly (56) for coupling the machine frame (12) to another machine frame (121) of the soil processing machine (10') or to another machine (54),
- a chassis assembly (26), wherein the chassis assembly (26) comprises a plurality of chassis units (28, 30) height-adjustably supported on the machine frame (12),
**characterised in that** the chassis assembly (26) comprises a plurality of independently height-adjustable chassis units (28, 30).

2. The soil processing machine according to claim 1,
**characterised in that** the chassis assembly (26) on both sides of the processing roller (22) in assignment to each longitudinal member (14, 16), respectively comprises a chassis unit (28, 30) supported on the longitudinal member (14, 16).

3. The soil processing machine according to claim 1 or 2,
**characterised in that** each chassis unit (28, 30) is pivotally coupled in a coupling region (40) to the assigned longitudinal members (14, 16) and is height-adjustably supported in a height adjustment region (42) disposed at a distance with respect to the coupling region (40) in the machine longitudinal direction (L) with respect to the assigned longitudinal member (14, 16) via a height adjustment assembly (44).

4. The soil processing machine according to claim 3,
**characterised in that** the height adjustment assembly (44) comprises a piston/cylinder unit (46) or a spindle unit.

5. The soil processing machine according to claim 4,
**characterised in that** each chassis unit (28, 30) comprises a chassis support (32) pivotally coupled to the longitudinal member (14, 16) in the coupling region (40) and coupled to the height adjustment assembly (44) in the height adjustment region (42).

6. The soil processing machine according to one of claims 1 to 5,
**characterised in that** each chassis unit (28, 30) has a soil processing machine footprint region (A) extending in the machine longitudinal region (L), and **in that** the roller rotation of axis (D) is positioned in the machine longitudinal direction (L) between a first footprint region longitudinal end (48) and a second first footprint region longitudinal end (50).

7. The soil processing machine according to one of claims 1 to 6,
**characterised in that** each chassis unit (28, 30) comprises a caterpillar chassis (34, 36).

8. The soil processing machine according to claim 5 and claim 7,
**characterised in that** the caterpillar chassis (34, 36) is substantially freely pivotally coupled to the chassis member (32).

9. The soil processing machine according to one of the preceding claims, **characterised in that** an oscillation mechanism (68) is assigned to the soil processing roller (22) having at least one imbalance mass (70, 72) disposed in the interior of the soil processing roller (22) and rotatable about an imbalance axis of rotation.

10. The soil processing machine according to claim 9,
**characterised in that** an imbalance drive (74) is assigned to the at least one imbalance mass (70, 72).

11. The soil processing machine according to claim 10,
**characterised in that** the imbalance drive (74) comprises an imbalance pressure fluid drive (104) having a pressure fluid pump (102) and a pressure fluid motor (110) coupled to the pressure fluid pump (102) via a pressure fluid circuit (106).

12. The soil processing machine according to claim 10 or 11,
**characterised in that** the imbalance drive (74) comprises a mechanical transmission mechanism (76) which transmits a drive torque from a drive motor to the at least one imbalance mass (70, 72), preferably comprising a belt drive (82).

13. The soil processing machine according to one of the preceding claims,
**characterised in that** a chassis drive (90) for driving the soil processing machine (10) in the machine longitudinal direction (L) is assigned to the chassis assembly (26).

14. The soil processing machine according to claim 13,
**characterised in that** the chassis drive (90) comprises a chassis pressure fluid drive (91) having a pressure fluid pump (92) and a pressure fluid motor (96) coupled to the pressure fluid pump (92) via a pressure fluid circuit (94).

15. The soil processing machine according to one of the preceding claims,
**characterised in that** the soil processing machine (10) can be coupled to a traction machine (54) by means of the coupling assembly (56) for moving in the machine longitudinal direction (L).

16. The soil processing machine according to claim 15,
**characterised in that** the coupling assembly (56) comprises a drawbar unit (58) preferably rigidly connected to the machine frame (12), having a coupling formation (60), preferably a coupling socket (62), for coupling to a counter-coupling formation, preferably a coupling ball, provided on the traction machine (54).

17. The soil processing machine according to claim 10 and claim 15 or 16,
**characterised in that** the imbalance drive (74) can be coupled to a drive unit of the traction machine (54).

18. The soil processing machine according to claim 13 and one of claims 15 to 17, **characterised in that** the chassis drive (90) can be coupled to a drive unit of the traction machine (54).

19. The soil processing machine according to one of claims 1 to 14,
**characterised in that** a drive unit is provided on the further machine frame (121) providing a rear end (120) of the soil processing machine (10'), and that the coupling assembly (56) comprises a steering articulation assembly (124) for the pivotal coupling of the machine frame (12) providing at least a portion of a front end (118) of the soil processing machine (10') to the further machine frame (121) about a steering articulation axis (L).

20. A soil processing train, comprising a traction machine (54) and a soil processing machine (10) coupled to the traction machine (54) according to one of claims 1 to 18.

21. A method for operating a soil processing machine according to claim 9 or one of claims 10 to 19, if referred back to claim 9, the soil processing machine (10; 10') comprising a lifting assembly (27), wherein the soil processing roller (22) is positionable in and out of contact with a soil (B) underlying the soil processing roller (22) by the lifting assembly (27) and/or a bearing load exerted by the soil processing roller (22) on the soil (B) underlying the soil processing roller (22) is variable,
wherein the method comprises the following measures:
a) at the beginning of a soil processing procedure, operating the lifting assembly (27) to position the soil processing roller (22) in such a way that it is out of contact with the soil (B) underlying it or a bearing load exerted by it on the underlying soil (B) is reduced with respect to a maximum bearing load,
b) after implementing measure a), putting the oscillation mechanism (68) into operation,
c) after implementing measure b), operating the lifting assembly (27) in such a way that the soil processing roller (22) comes into contact with the underlying soil (B) or that a bearing load exerted by the soil processing roller (22) on the underlying soil is increased.

22. A method for operating a soil processing machine, according to claim 9 or according to one of the claims 10 to 19 , if referred back to claim 9, the soil processing machine (10; 10') comprising a lifting assembly (27), wherein the soil processing roller (22) is positionable in and out of contact with a soil (B) underlying the soil processing roller (22) by the lifting assembly (27) and/or a bearing load exerted by the soil processing roller (22) on the soil (B) underlying the soil processing roller (22) is variable,
wherein the method comprises the following measure:
d) for performing a soil processing procedure with the oscillation mechanism (68) in operation, operating the lifting assembly (27) in such a way that a bearing load exerted by the soil processing roller (22) on the underlying soil (B) is reduced with respect to a maximum bearing load.

23. Method according to claim 22, **characterised in that** the method comprises further the following measure:
e) while performing a soil processing procedure with the oscillation mechanism (68) in operation, operating the lifting assembly (27) in such a way that a bearing load exerted by the soil processing roller (22) on the underlying soil (B) is changed with respect to a maximum bearing load.

24. Method according to one of claims 21 to 23, **characterised in that** the lifting assembly (27) comprises the chassis assembly (26).

## Revendications

1. Machine de travail du sol, comprenant
- un châssis de machine (12) comprenant deux éléments longitudinaux (14, 16) disposés à distance l'un de l'autre transversalement à la direction longitudinale de la machine (L), s'étendant essentiellement dans la direction longitudinale de la machine (L), et deux éléments transversaux (18, 20) disposés à distance l'un de l'autre dans la direction longitudinale de la machine (L), s'étendant essentiellement transversalement à la direction longitudinale de la machine (L),
- un rouleau de travail du sol (22) supporté de manière rotative autour d'un axe de rotation du rouleau (D) dans la direction longitudinale de la machine (L) entre les éléments transversaux (18, 20) sur les éléments longitudinaux (14, 16),
- un ensemble d'accouplement (56) pour accoupler le châssis de machine (12) à un autre châssis de machine (121) de la machine de travail du sol (10') ou à une autre machine (54),
- un ensemble de châssis (26), dans lequel l'ensemble de châssis (26) comprend une pluralité d'unités de châssis (28, 30) supportées de manière réglable en hauteur sur le châssis de machine (12),
**caractérisé en ce que** l'ensemble de châssis (26) comprend une pluralité d'unités de châssis réglables en hauteur de manière indépendante (28, 30).

2. Machine de travail du sol selon la revendication 1,
**caractérisé en ce que** l'ensemble de châssis (26) comprend sur les deux côtés du rouleau de travail du sol (22), associé avec chaque élément longitudinal (14, 16), respectivement une unité de châssis (28, 30) supportée sur l'élément longitudinal (14, 16).

3. Machine de travail du sol selon la revendication 1 ou 2,
**caractérisé en ce que** chaque unité de châssis (28, 30) est accouplée de manière pivotante dans une zone d'accouplement (40) à l'élément longitudinal associé (14, 16) et est supportée de manière réglable en hauteur dans une zone de réglage en hauteur (42) disposée à une certaine distance par rapport à la zone d'accouplement (40) dans la direction longitudinale de la machine (L) par rapport à l'élément longitudinal associé (14, 16) par l'intermédiaire d'un ensemble de réglage en hauteur (44).

4. Machine de travail du sol selon la revendication 3,
**caractérisé en ce que** l'ensemble de réglage en hauteur (44) comprend une unité piston/cylindre (46) ou une unité de broche.

5. Machine de travail du sol selon la revendication 4,
**caractérisé en ce que** chaque unité de châssis (28, 30) comprend un support de châssis (32) accouplé de manière pivotante à l'élément longitudinal (14, 16) dans la zone d'accouplement (40) et accouplé à l'ensemble de réglage en hauteur (44) dans la zone de réglage en hauteur (42).

6. Machine de travail du sol selon l'une des revendications 1 à 5,
**caractérisé en ce que** chaque unité de châssis (28, 30) présente une zone d'empreinte de machine de travail du sol (A) s'étendant dans la direction longitudinale de la machine (L), et **en ce que** l'axe de rotation du rouleau (D) est positionné dans la direction longitudinale de la machine (L) entre une première extrémité longitudinale de la zone d'empreinte (48) et une deuxième extrémité longitudinale de la zone d'empreinte (50).

7. Machine de travail du sol selon l'une des revendications 1 à 6,
**caractérisé en ce que** chaque unité de châssis (28, 30) comprend un châssis de chenille (34, 36).

8. Machine de travail du sol selon les revendications 5 et 7,
**caractérisé en ce que** le châssis à chenilles (34, 36) est accouplé au châssis (32) de manière essentiellement librement pivotante.

9. Machine de travail du sol selon l'une des revendications précédentes,
**caractérisé en ce qu'**un mécanisme d'oscillation (68) est associé au rouleau de travail du sol (22), comportant au moins une masse de balourd (70, 72) disposée à l'intérieur du rouleau de travail du sol (22) et pouvant tourner autour d'un axe de rotation de balourd.

10. Machine de travail du sol selon la revendication 9,
**caractérisé en ce qu'**un entraînement de balourd (74) est associé à ladite au moins une masse de balourd (70, 72).

11. Machine de travail du sol selon la revendication 10,
**caractérisé en ce que** l'entraînement de balourd (74) comprend un entraînement de fluide de pression de balourd (104) ayant une pompe de fluide de pression (102) et un moteur de fluide de pression (110) accouplé à la pompe de fluide de pression (102) par l'intermédiaire d'un circuit de fluide de pression (106).

12. Machine de travail du sol selon la revendication 10 ou 11,
**caractérisé en ce que** l'entraînement de balourd (74) comprend un mécanisme de transmission mécanique (76) qui transmet un couple d'entraînement d'un moteur d'entraînement à au moins une masse de balourd (70, 72), comprenant de préférence un entraînement par courroie (82).

13. Machine de travail du sol selon l'une des revendications précédentes,
**caractérisé en ce qu'**un entraînement de châssis (90) est associé à l'ensemble de châssis (26) pour entraîner la machine de travail du sol (10) dans la direction longitudinale de la machine (L).

14. Machine de travail du sol selon la revendication 13,
**caractérisé en ce que** l'entraînement du châssis (90) comprend un entraînement de fluide sous pression du châssis (91) avec une pompe à fluide sous pression (92) et un moteur à fluide sous pression (96) accouplé à la pompe à fluide sous pression (92) par l'intermédiaire d'un circuit de fluide sous pression (94).

15. Machine de travail du sol selon l'une des revendications précédentes,
**caractérisé en ce que** la machine de travail du sol (10) peut être accouplée à une machine de traction (54) au moyen de l'ensemble d'accouplement (56) pour se déplacer dans la direction longitudinale de la machine (L).

16. Machine de travail du sol selon la revendication 15,
**caractérisé en ce que** l'ensemble d'accouplement (56) comprend une unité de timon (58) de préférence rigidement reliée au châssis de machine (12), avec une formation d'accouplement (60), de préférence une douille d'accouplement (62), pour l'accouplement à une formation de contre-accouplement, de préférence une boule d'accouplement, prévue sur la machine de traction (54).

17. Machine de travail du sol selon la revendication 10 et la revendication 15 ou 16, **caractérisé en ce que** l'entraînement de balourd (74) peut être accouplé à une unité d'entraînement de la machine de traction (54).

18. Machine de travail du sol selon la revendication 13 et l'une des revendications 15 à 17,
**caractérisé en ce que** l'entraînement du châssis (90) peut être accouplé à une unité d'entraînement de la machine de traction (54).

19. Machine de travail du sol selon l'une des revendications 1 à 14,
**caractérisé en ce qu'**une unité d'entraînement est prévue sur un autre châssis de machine (121) constituant une extrémité arrière (120) de la machine de travail du sol (10'), et que l'ensemble d'accouplement (56) comprend un ensemble d'articulation de direction (124) pour l'accouplement pivotant du châssis de machine (12) constituant au moins une partie de l'extrémité avant (118) de la machine de travail du sol (10') à l'autre châssis de machine (121) autour d'un axe d'articulation de direction (L).

20. Train de travail du sol comprenant une machine de traction (54) et une machine de travail du sol (10) accouplée à la machine de traction (54), selon l'une des revendications 1 à 18.

21. Procédé de fonctionnement d'une machine de travail du sol selon la revendication ou une des revendications 10 à 19, si l'on se réfère à la revendication 9, la machine de travail du sol (10 ; 10') comprenant un ensemble de levage (27), dans lequel le rouleau de travail du sol (22) peut être positionné en contact et hors contact avec un sol (B) sous-jacent au rouleau de travail du sol (22) par l'ensemble de levage (27) et/ou une charge d'appui exercée par le rouleau de travail du sol (22) sur le sol (B) sous-jacent au rouleau de travail du sol (22) est variable,
dans lequel le procédé comprend les mesures suivantes :
a. au début d'une procédure de travail du sol, actionner l'ensemble de levage (27) pour positionner le rouleau de travail du sol (22) de manière à ce qu'il ne soit pas en contact avec le sol (B) sous-jacent ou qu'une charge d'appui exercée par lui sur le sol (B) sous-jacent soit réduite par rapport à une charge d'appui maximale,
b. après avoir mis en oeuvre la mesure a), mettre en service le mécanisme d'oscillation (68),
c. après la mise en oeuvre de la mesure b), actionner l'ensemble de levage (27) de manière à ce que le rouleau de travail du sol (22) entre en contact avec le sol sous-jacent (B) ou qu'une charge d'appui exercée par le rouleau de travail du sol (22) sur le sol sous-jacent soit augmentée.

22. Procédé d'utilisation d'une machine de travail du sol, selon la revendication 9 ou selon l'une des revendications 10 à 19, si l'on se réfère à la revendication 9, la machine de travail du sol (10 ; 10') comprenant un ensemble de levage (27), dans lequel le rouleau de travail du sol (22) peut être positionné en contact et hors contact avec un sol (B) sous-jacent au rouleau de travail du sol (22) par l'ensemble de levage (27) et/ou une charge d'appui exercée par le rouleau de travail du sol (22) sur le sol (B) sous-jacent au rouleau de travail du sol (22) est variable,
dans lequel le procédé comprend la mesure suivante :
d) pour effectuer une procédure de travail du sol avec le mécanisme d'oscillation (68) en fonctionnement, actionner l'ensemble de levage (27) de telle sorte qu'une charge d'appui exercée par le rouleau de travail du sol (22) sur le sol sous-jacent (B) soit réduite par rapport à une charge d'appui maximale.

23. Procédé selon la revendication 22, **caractérisé en ce que** le procédé comprend en outre la mesure suivante :
e) pendant l'exécution d'une procédure de travail du sol avec le mécanisme d'oscillation (68) en fonctionnement, actionner l'ensemble de levage (27) de manière à modifier la charge d'appui exercée par le rouleau de travail du sol (22) sur le sol sous-jacent (B) par rapport à une charge d'appui maximale.

24. Procédé selon une des revendications 21 à 23, **caractérisé en ce que** l'ensemble de levage (27) comporte l'ensemble de châssis (26).
